# EUROPEAN PATENT SPECIFICATION

(11) **EP 1 630 770 B1**
(45) Date of publication and mention of the grant of the patent: **21.11.2007**
(21) Application number: 04255133.3
(22) Date of filing: 26.08.2004
(51) Int. Cl.: G09F 19/00, G09F 23/06

(54) **Method and apparatus for viewing the visual properties of a gemstone on a packaging unit**
Vorrichtung und Verfahren zur Sichtdarstellung der visuellen Eigenschaften eines Edelsteins auf einer Verpackungseinheit
Méthode et appareil de représentation visuelle des propriétés visuelles d'une pierre gemme sur une unité d'emballage

(43) Date of publication of application: 01.03.2006
(73) Proprietor: Overseas Diamonds Technologies N.V., 2018 Antwerpen (BE)
(72) Inventor: Lapa, Dave c/o Overseas Diamonds Technologies N.V., 2018 Antwerpen (BE); Keersmaekers, Christiaan Louis Cecile c/o Overseas, Hoveniersst. 2, Suite 803 2018 Antwerpen (BE); Lenaerts, Christian Marie Joseph Ghislain Cornille, Hoveniersstr.2, Suite803, 2018 Antwerpen (BE); Van de Velde, Marc Frans Alida, Hoveniersst.2, Suite 803, 2018 Antwerpen (BE); Roca, Marti Guixe, Hoveniersst.2, Suite 803, 2018 Antwerpen (BE)
(74) Representative: Musker, David Charles

(56) References cited:
- EP-A1- 1 079 360
- DE-A1- 19 902 333
- US-A1- 2001 020 935
- US-A1- 2002 190 869

## Description

### Field of the Invention

The present invention relates to a method or apparatus for packaging a gemstone. More particularly, the present invention relates to a method or apparatus for viewing the visual properties of a gemstone on a packaging unit.

### Description of the Related Technology

In known packaging systems, the product for sale is usually placed within a packaging unit and displayed on a shelf within a shop. The packaging unit may be of various shapes, sizes and made from many different materials. For example, the packaging unit may be a box type package with a lid and made of a plastic type material. The product for sale would be placed inside the box, and the box would be sealed by closing the lid. A generic image of the product would be placed on the external surfaces of the box to indicate to the consumers the type of product that is located within the box.

US 2002/0190869 discusses a container for a beverage which includes a wall with a display showing digital images which are stored in a memory. The digital images may be a presentation about the beverage in the container, or a presentation such as an advert for a forthcoming movie attraction.

One problem associated with this kind of packaging is that the consumer cannot see what is inside the packaging unit unless the packaging unit is either opened or made from a transparent material. It is not always convenient to use a transparent packaging material for various reasons such as, for example, the transparent material is too expensive and is not malleable enough to form a packaging shape. Even if a transparent material were used, the consumer cannot easily identify important visual features of the product inside the box in order to help them decide whether the product is the right product for them.

For example, in the case of a visually aesthetically pleasing product, such as a gemstone, it may not be possible to determine an accurate and realistic visual representation of the gemstone's visual features clearly through the transparent packaging.

A further problem is that the images shown on the external surfaces of the packaging units are not of the actual product that is to be located inside the packaging unit. The pictures are usually of a generic idealised version of the product in order to seduce the customer into purchasing the product, and not an accurate visual representation of the product to be placed within the packaging unit. This can lead to the consumer being misled and so becoming upset causing a loss in revenue due to the loss of goodwill.

When selling a product such as a gemstone, for example diamonds, the gemstones are usually placed inside a glass cabinet on a display pad for consumers to visually compare the gemstones in order to make a decision as to which gemstone they wish to purchase. Upon making this decision, the gemstone is removed from the display case, polished and placed inside a jewellery box for the consumer to take away.

The beauty of gemstone, such as a cut diamond, derives from its light handling ability. What attracts the eye is the "game of light" played by a well cut diamond as incident light is reflected and refracted off its many facets. Diamonds and other gemstones have been cut, polished and worn as jewellery for thousands of years. They may be cut according to many different cut patterns such as the round brilliant, oval, pear, marquise, radiant, princess, heart, emerald cut etc. The most popular cut today is known as the standard round and brilliant (SRB) cut.

When purchasing a gemstone, such as a cut diamond, an untrained observer typically relies on the skill and knowledge of the jeweller to explain the differences between one gemstone and another. When describing a cut diamond to an untrained observer, the jeweller may refer to what are known as the four C's; that is, its carat weight, clarity, colour and cut. Each of these factors has an effect on the value of the diamond. Of these factors, the effect of carat weight is relatively straightforward for the untrained observer to understand. That is, the value of a cut diamond generally increases with increasing carat weight. Similarly, the effects of clarity (clear diamonds are generally more valuable than less clear diamonds) and the colour (colourless diamonds are generally move valuable than coloured diamonds) are relatively straightforward for the untrained observer to understand.

However, it is the cut of a diamond, and its dramatic effect of light handling ability, that has the most significant effect on value. Diamond cutting and polishing is a highly skilled art and a well cut diamond will command a significant price premium over an otherwise identical but poorly cut diamond. However, given the theoretical complexity of the effect of cut on the optical performance of a gemstone, it is hardly surprising that it is the most difficult factor for a jeweller to explain to an untrained observer.

In order to describe light handling abilities of cut gemstones, subjective parameters such as brilliance (the intensity of light returned), scintillation (fast, local fluctuation in the light returned as the diamond moves relative to the lighting conditions), symmetry (the symmetry of light patterns such as the so called "hearts and arrows") and fire (the dispersion of white light into spectral colours) are used.

One problem associated with the selling of gemstones is that the consumer cannot obtain a good visual comparison between two gemstones situated side by side within a glass cabinet. Neither can two gemstones be easily compared visually side by side when they are located inside their respective jewellery boxes.

Further, after the gemstones have been purchased by the customers, it is not easy for two customers to compare the visual characteristics of the gemstones with each other, unless they remove the gemstones from the packaging units and hold them up to an identical light source simultaneously.

The present invention aims to overcome or at least alleviate some or all of the aforementioned problems.

### Summary of Certain Inventive Aspects

In one aspect, the present invention provides a method of displaying a visual representation of a gemstone associated with a packaging unit, for the gemstone, the packaging unit comprising a display device, and a memory device, the method comprising the steps of:
storing information related to a visual representation of the gemstone in the memory device; and
arranging the display device to display a visual representation of the gemstone associated with the packaging unit using the stored information in the memory device.

In a further aspect, the present invention provides the combination of a packaging unit and a gemstone associated with the packaging unit, the packaging unit comprising a display device and a memory device, wherein the memory device stores information related to the gemstone and the display device is arranged to display the stored information.

An embodiment of the present invention has the advantage of providing the ability to view a moving image of the actual product associated with the packaging unit, thus allowing consumers the ability to view the product's visual features in detail without the need to see the actual product associated with the packaging unit. This in turn provides an aid to selling the product in a shop through the comparison of products against other products as well as providing a means to assess the subjective beauty of an individual product stored inside a packaging unit.

Further, the invention provides the advantage of allowing consumers to easily compare visual images of the product after purchasing the product and leaving the shop premises. For example, consumers who have bought diamonds at different times may visually compare the cut of their diamonds without the need to remove the diamonds from the packaging, in order to see which diamond is the best.

Further, the present invention provides the advantage of catching the attention of passers-by walking past a shop window. Alternatively, the present invention provides the advantage of catching the attention of browsers entering a large shopping environment. Passers-by and browsers would be attracted to the visual representation of the product's image being shown upon the packaging unit and so would approach the products being displayed in order to obtain further information.

### Brief Description of the Drawings

Specific embodiments of the present invention will now be described by way of example only, with reference to the accompany drawings, in which:
Figure 1 shows a block diagram of a data and image transfer process;
Figure 2 shows a block diagram of a circuit used according to an embodiment of the present invention;
Figure 3 shows a packaging unit according to an embodiment of the present invention;
Figure 4 shows the internal component of the packaging unit shown in Figure 3;
Figure 5 shows the packaging unit shown in Figures 3 and 4 being used to store a gemstone;
Figure 6 shows numerous packaging units as shown in Figure 5 being displayed;
Figures 7A and 7B show a display box packaging unit according to another embodiment of the present invention;
Figure 8 shows a further embodiment of the packaging unit;
Figure 9 shows yet a further embodiment of the packaging unit;
Figure 10 shows the display box packaging unit as shown in Figure 7 being used;
Figure 11 shows the display box packaging unit of Figure 7 and the packaging unit of Figure 3 being used.

### Detailed Description of Certain Inventive Embodiments

Referring to the applicant's earlier patent applications, US 2004,0072137 describes a computer implemented method of and system for teaching an untrained observer to evaluate a gemstone. Further, granted European patent EP patent EP 1319942 discloses an apparatus for generating data for determining a property of a gemstone and methods and computer programs for determining a property of a gemstone.

These prior patent applications describe how a number of images of the gemstone are captured at different rotational positions whilst shining a light source on the gemstone. For example, the images are captured at 2° intervals over a 90° range, thus providing 45 images. These images are used to show visually to the consumer certain light characteristics of the gemstone, such as scintillation.

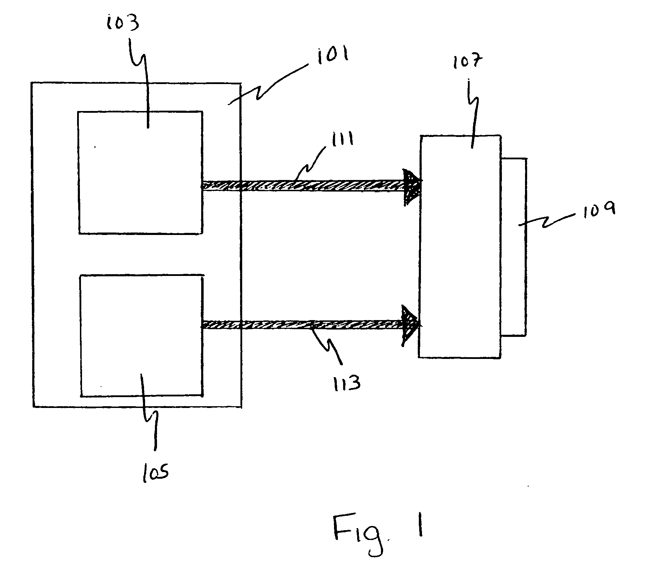

Referring to Figure 1, a personal computing device 101 is shown. The personal computer 101 runs a standard operating system, such as Microsoft Windows XP or the like. Images are captured and stored by the image capture device as described in the applicant's previous patent applications. A camera captures the images and stores them as bitmap files. The PC 101 stores the bitmap files showing images of the gemstone in a scanned files store 103. Further, the PC 101 includes a database 105 for storing data associated with the gemstone, such as a unique identification number or carat weight of the gemstone.

Using a memory device port 107 with a memory device 109 located within the port 107, the scanned files within the scanned files store 103 are transferred from the scanned files store 103 to the memory device 109 along the scanned file communications channel 111. The communications channel may be any suitable data communications medium, for example, the PCI/XIO interface.

Further, the data held within the database 105 is transferred along a data file communications channel 113 into the memory device 109.

In this embodiment, the memory device is a Sony Memory Stick (MS) flash memory card, but may be any other suitable memory device.

After the above-described procedure, the memory device 109 contains bitmap images of the gemstone along with data associated with that gemstone.

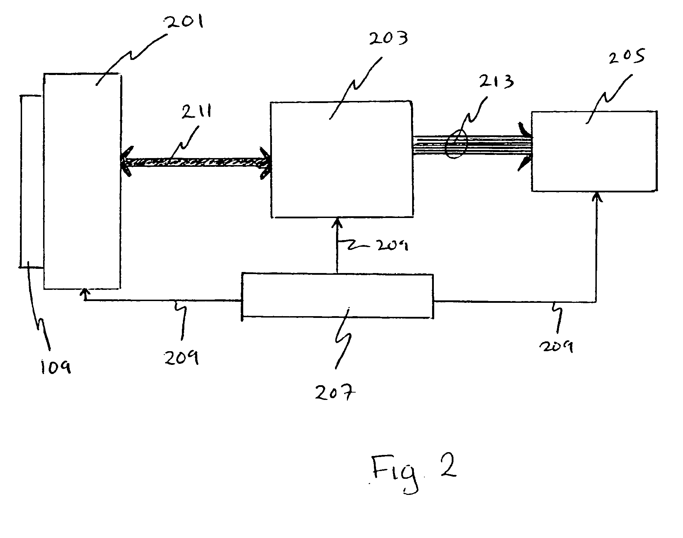

Referring to Figure 2, a block diagram is shown of a circuit used in this embodiment. The memory device 109 (with the stored bitmap images and stored data) is inserted within a packaging unit memory device port 201. The packaging unit memory device port 201 is connected to a display microcontroller 203 via a first data channel 211. The display microcontroller 203 is connected to a display device 205 via a second data channel 213. The packaging unit memory device port 201, display microcontroller 203 and display device 205 are provided with power from a power supply 207 along power supply lines 209.

The display device in this embodiment is a liquid crystal display. The liquid crystal display is a transmissive (i.e. the pixels are illuminated from behind the screen) active matrix thin film transistor (TFT) type of display. However, any other suitable type of display could be used.

The display microcontroller 203 in this embodiment is a Nexperia PNX1500 available from Philips Semiconductors.

The packaging unit memory device port 201 is any suitable memory device port used with a memory stick type memory device 109. Any other suitable memory port can be used in conjunction with other types of memory devices.

The power supply 207 is a small high-powered battery unit such as a lithium ion battery.

The display microcontroller 203 receives the data from the memory device 109 connected to the packaging unit memory device port 201, via the first data channel 211. The display microcontroller 203 outputs the gemstone image data (bitmaps) and data files (text) in a suitable format along the second data channel 213 to be displayed upon the display device 205. In this embodiment, the second data channel 213 is a TTL-RGB output of the PNX1500. The display device 205 is then able to sequentially display the stored bitmap images of the gemstone alongside the data associated with that gemstone, for example its unique identification number.

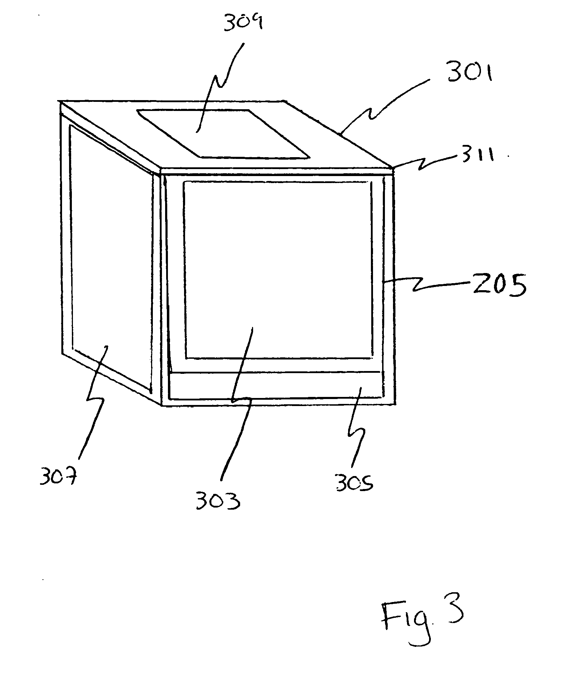

Referring to Figure 3, a packaging unit 301 is shown according to this embodiment. The packaging unit 301 is the size of a standard jewellery box used to store a gemstone (not shown). The packaging unit 301 includes a display device 205 of the type previously described. The display device 205 has a first display area 303 and a second display area 305. The first display area 303 is used to show the stored sequential images of the gemstone associated with the packaging unit. The second display area 305 is used to display the stored data associated with that same gemstone.

The packaging unit 301 also includes an information area 307 whereby information related to the product may be printed on the packaging unit 301. For example, in this embodiment the information shown in the information area 307 includes the certified characteristics of the gemstone associated with the packaging unit 301.

Further, a quality label 309 may be attached to the packaging unit 301 in order to identify the producer of the gemstone. This quality label assures the consumer that the product is coming from a reputable and recognisable producer.

Located at the top of the packaging unit 301 is a lid 311. The lid 311 is opened up in order to insert and remove the gemstone from the packaging unit 301. In this embodiment the lid 301 is hinged at one side, however it will be understood that any suitable type of lid may be used.

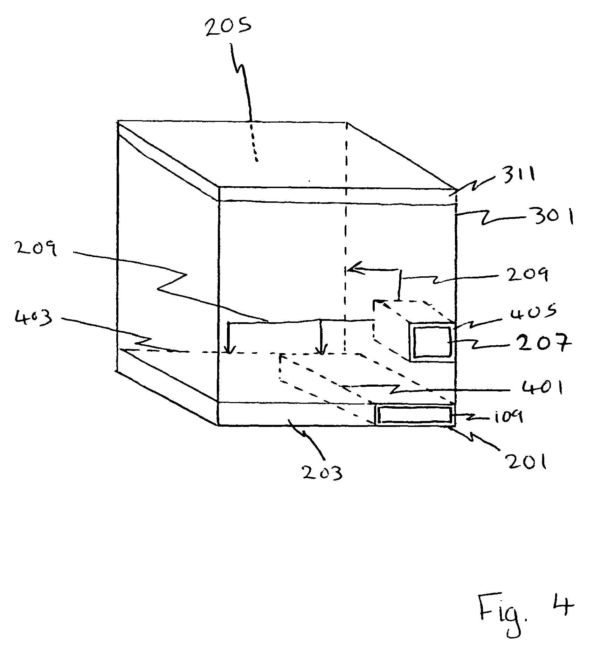

Figure 4 shows the internal components of the packaging unit 301 described above. Located at the base of the packaging unit 301 is the packaging unit memory device port 201. The memory device 109 is inserted through the opening of the device port 201 and fitted into place. Also located in the base of the packaging unit 301 is the display microcontroller 203. The display microcontroller 203 is interconnected to the packaging unit memory device port 201 via the interface connections 211 forming the first data channel 211.

At the front of the packaging unit 301 is located the display device 205 on the external front surface of the packaging unit 301, as described above.

In this embodiment, the liquid crystal display (LCD) device 205 is attached to the packaging unit using a suitable adhesive. The display device 205 is sufficiently light in weight for it to be securely fastened to the packaging unit.

The display microcontroller 203 is interconnected to the display device 205 via interface connections 403, thus connecting the second data channel 213 between the two components (203, 205).

Also located within the packaging unit 301 is a battery compartment 405 arranged to accept the power supply device 207 of the type described above. The power outputs of the power supply device 207 are connected to the display device 205, the display microcontroller 203 and the packaging unit memory device port 201 via the power supply lines 209.

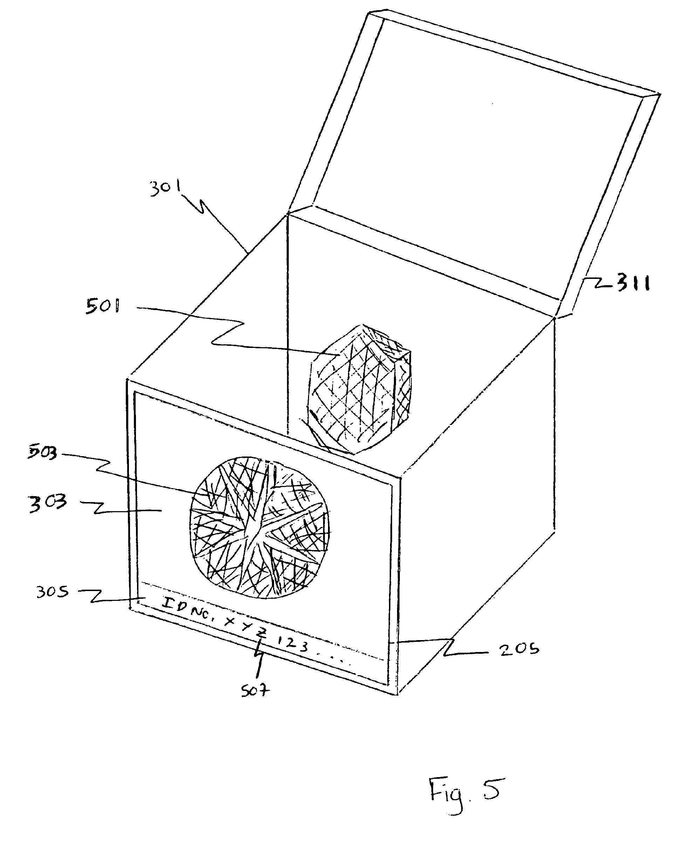

Figure 5 shows one example of how the packaging unit 301 may be used in conjunction with a gemstone 501. The packaging unit 301 has the gemstone 501 located within it. On the front of the packaging unit 301 is the display device 205 incorporating the first display area 303 and the second display area 305. The first display area 303 on the display device 205 shows a moving image of the actual gemstone located within the packaging unit 301. The moving image 503 is the image taken previously and stored on the memory device 109 as described above. In this embodiment the moving image is displayed using 45 consecutive bitmap images stored in the memory device 109. After the 45^{th} image is displayed, the display microcontroller 203 is arranged to display the images again, starting from image No. 1 such that the image 503 is played in a loop.

The packaging unit 301 incorporates a lid 311, which, upon placing the gemstone 501 into the packaging unit 301, is closed. The consumer who has purchased the gemstone 501 may take the packaging unit 301 away with them. The consumer then at any time may view the optical characteristics of the gemstone 501 as shown on the display device 205 as a moving image 503 at any time without removing the gemstone 501 from the packaging unit 301.

In addition to the display of the moving image 503, data associated with the gemstone 501 is displayed in the second display area 305. Data including the unique identification number 507 of the gemstone and carat weight, for example, is displayed next to the moving image 503. The data information is scrolled across the second display area 305 in this embodiment.

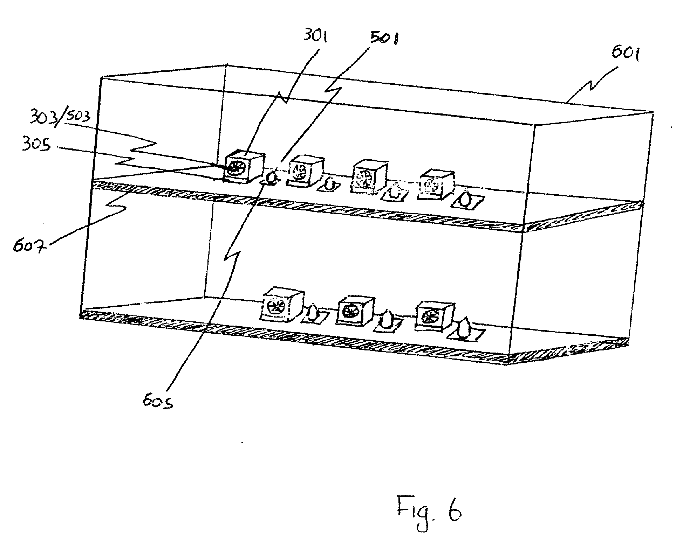

Figure 6 shows an example of the packaging unit 301 being used within a shop environment. A number of the packaging units 301 are placed inside a glass case 601 upon a shelf unit 607. Alongside each of the packaging units 301 is placed the gemstone 501 associated with that packaging unit 301 upon a gemstone holder 605. Each of the packaging units 301 displays the moving image of the associated gemstone 503 upon the first display area 303 of the display device 205. In addition to displaying the moving image 503 of the gemstone 501, data associated with the gemstone 501 is displayed in the second display area 305 as described above.

Therefore, consumers entering the shop intending to purchase a gemstone may view the optical characteristics of each gemstone by viewing the moving image 503 on the display device 205 on each packaging unit 301 in order to more easily distinguish the difference in visual characteristics of the gemstones, and so determine which gemstone 501 they wish to purchase. The act of placing together the many packaging units 301 allows the consumer to make a visual comparison in real time of different gemstone's visual characteristics. This gives the consumer a real sense of choice by attracting the consumer and seducing them with the visible scintillation of the gemstones being displayed.

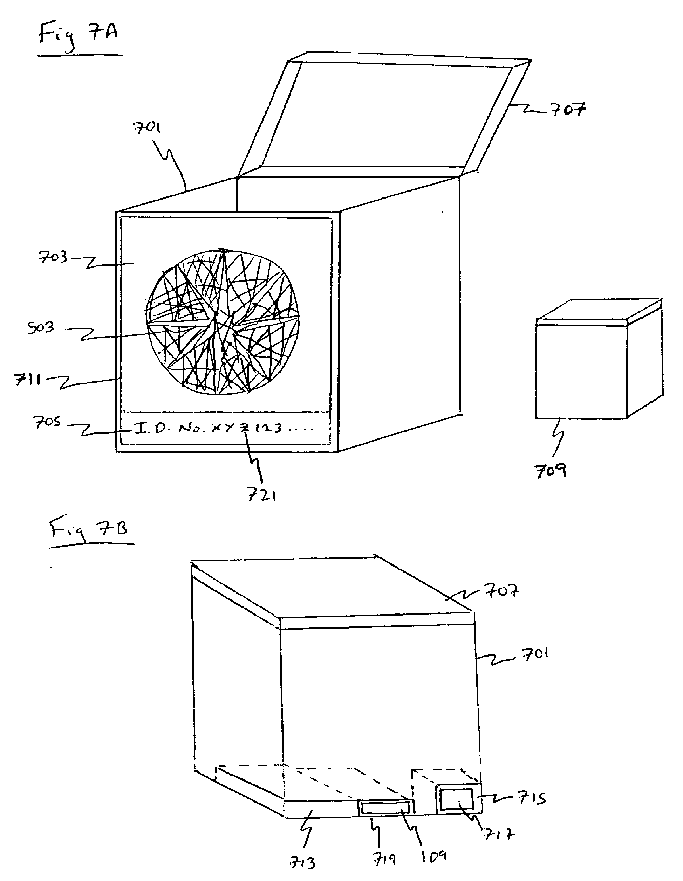

Figure 7A shows a different embodiment of a packaging unit 701 intended for use as a display box. The display box packaging unit 701 is larger than the jewellery box type packaging unit 301 previously described.

The display box packaging unit 701 includes similar components to that of the jewellery box type packaging unit 301 as shown in Figure 7B and discussed below. A display device 711 is affixed to the front face of the display box packaging unit 701 using, in this embodiment, for example, a suitable adhesive.

The display box packaging unit 701 includes, within a base compartment, a display micro controller 713, a battery compartment 715 arranged to accept a power supply device 717, a memory device port 719 arranged to accept a memory device 109. These components are connected together in a similar fashion to the previous embodiment.

The display 711 includes a first display area 703 and a second display area 705. As in the jewellery box packaging unit 301 described above, the first display area 703 displays a moving image of 503 of a gemstone associated with the display box packaging unit 701. In the second display area 705, data associated with that gemstone is displayed. For example, the ID number 721 and carat weight etc are scrolled across the second display area 705.

As the moving image 503 is shown on the front surface of the display box packaging unit 701, the display boxes 701 may be stacked inside a glass case allowing consumers to view the moving image of the gemstone (not shown) within the packaging unit 701 from the front of the packaging unit 701.

A standard jewellery box 709 including a gemstone (not shown) fits inside the display box packaging unit 701 along with a folder including the quality guarantee associated with the gemstone, a gemstone certificate and an information folder providing the consumer information associated with their purchase.

Upon purchasing the gemstone the consumer takes away the display box packaging unit 701 along with the above mentioned items.

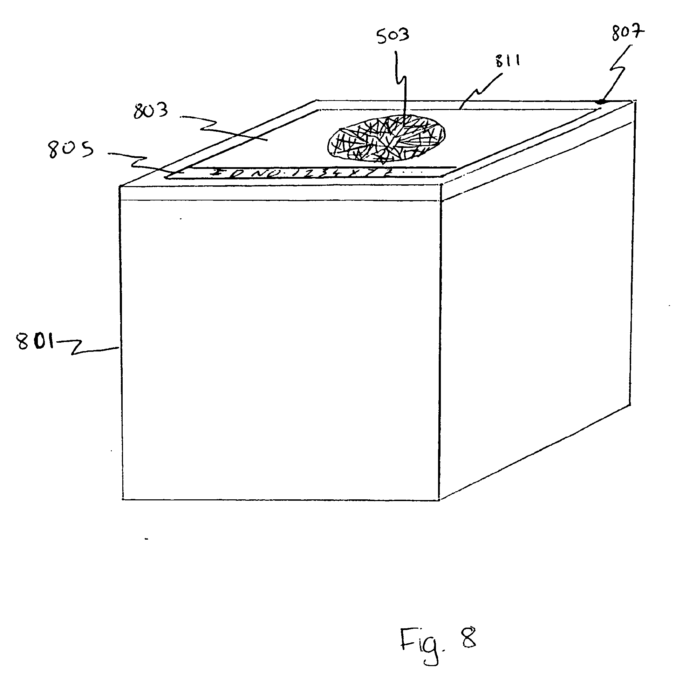

A further embodiment of a packaging unit 801 is shown in Figure 8. This packaging unit 801 may be of the type depicted in Figures 3, 4, 5 and 6, or alternatively may be of the type depicted in Figure 7.

The packaging unit 801 includes a display device 811 fixedly attached to the outer surface of the lid 807 of the display box packaging unit 801 using a suitable adhesive.

As in the previous embodiments, the display device 811 incorporates a first display area and a second display area 805, wherein the first display area 803 shows a moving image 503 of the gemstone (not shown) associated with the packaging unit 801, and the second display area 805 shows data associated with the gemstone.

As the moving image 503 is located on the top surface of the lid 807 attached to the packaging unit 801, the display box 801 may be placed within a glass display unit such that the consumers can view the moving image 503 from above.

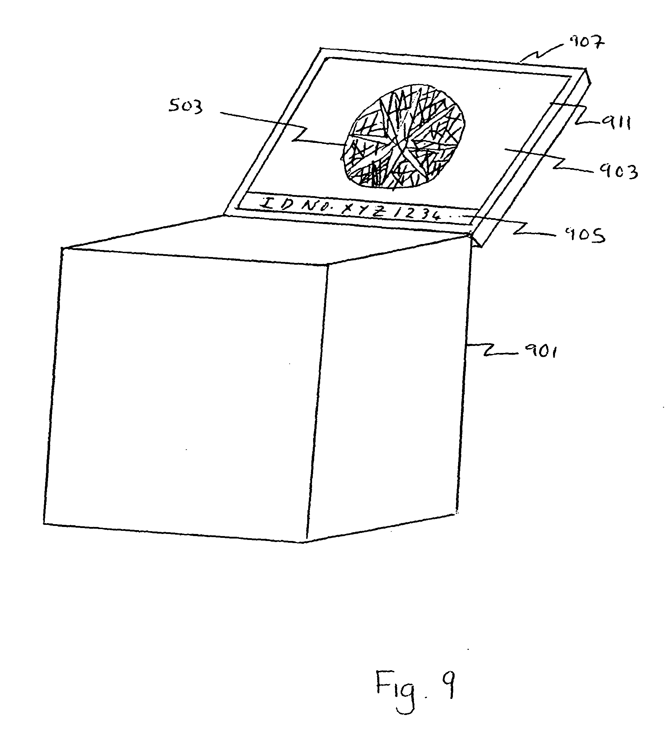

Figure 9 shows a further embodiment of a packaging unit. This packaging unit 801 may be of the type depicted in Figures 3, 4, 5 and 6, or alternatively may be of the type depicted in Figure 7.

The packaging unit 901 includes a lid 907, with a display device 911 attached on the inside surface of the lid 907 using a suitable adhesive. The display device 911 is therefore visible when the lid 907 is in an open position.

As in the above embodiments, the display device 911 incorporates two display areas, a first display area 903 for showing the moving image 503 and a second display area 905 for showing the data associated with the gemstone.

In this configuration, a user will be able to view the moving image of the gemstone located inside the packaging unit 901 whilst also being able to view the other contents of the packaging unit 901, such as the gemstone in the case of the jewellery box packaging unit embodiments shown in Figures 3, 4, 5 and 6, or the folder incorporating the quality guarantee, diamond certificate and information folder in the case of the display box packaging unit embodiment shown in Figure 7.

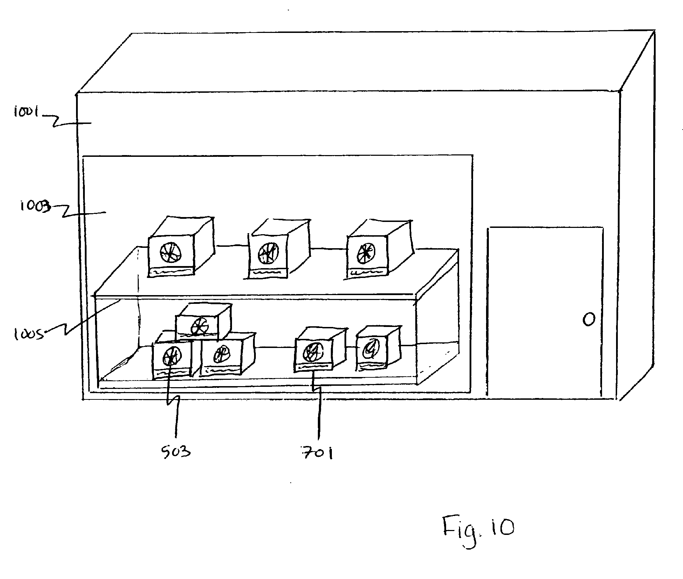

Figure 10 shows a scenario wherein the display box packaging unit 701 discussed above is used in a shop window. The display box packaging unit 701 is located on a shelf unit 1005 within a shop window 1003 of a shop 1001 selling gemstones. The moving images 501 of the gemstones stored within the display box packaging unit 701 catch the eye of passers-by such that potential consumers are encouraged to enter the shop 1001 in order to find out further information concerning the gemstones being sold.

The consumer would easily be able to stand outside the shop 1001 and visually compare different gemstones located within the display box packaging unit 701 without having to actually view the particular gemstones themselves. This provides an additional advantage that the expensive gemstones do not have to be displayed in a shop window in order to entice consumers into the shop, and so the security risk of having the gemstones stolen by smashing the window is reduced.

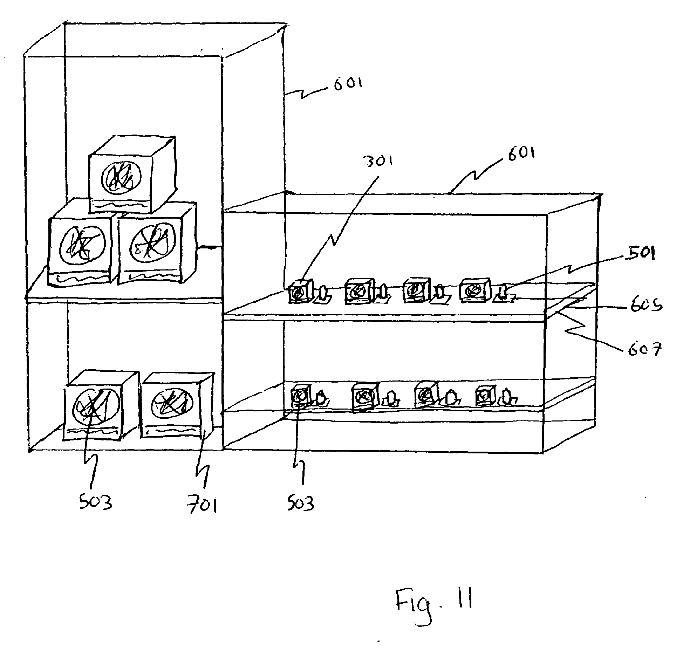

Figure 11 shows a scenario whereby the display box packaging unit 701 and the jewellery box type packaging unit 301 are used in conjunction with each other. The jewellery box type packaging units 301 are located within a glass case 601 upon a shelf 607 alongside their associated gemstones 501, which are positioned upon gemstones holders 605. Moving images of these gemstones are displayed upon the front surface of the jewellery type packaging unit 301. Alternatively, the moving image may be displayed on the top surface (i.e. the lid) of the packaging unit.

In addition, display box packaging units 701 are located alongside in a further glass case 601, wherein the gemstones are located inside the display box packaging units 701 within their individual jewellery boxes. A moving image 503 shows the visual characteristics of the gemstones located therein.

This arrangement is such that consumers within a large shopping area would notice the visual moving display of the display box packaging units 701 and then be able to view moving images 503 of additional gemstones associated with the smaller packaging units 301.

It will be understood that embodiments of the present invention are described herein by way of example only, and that various changes and modifications may be made without departing from the scope of the invention.

For example, the various configurations of the display device shown in Figures 7, 8 and 9 for the display box type packaging unit may also be applied to the jewellery type packaging unit 301 discussed in the first embodiment. For example, the display device may be attached to the lid, internally or externally, of the jewellery type packaging unit 301.

Further, any type of suitable display device may be used and attached to the packaging units in any suitable manner. For example, the display may be a black and white liquid crystal display, a passive matrix display such as a colour super twist nematic or double layer super twist nematic device. Further, the liquid crystal display could be a reflective type liquid crystal display.

It will also be clear that any suitable memory device may be used such as the secure digital (SD) memory device, multi media card (MMC) memory device, compact flash (CF) card type 1 and 2, smart media (SM) card and XD card.

In fact, a non-removable memory could be used, and a data port such as an RS-232 or USB port, or a wireless device such as a Bluetooth or Infrared receiver, could be provided on the box, for supplying the image data to the memory.

Any suitable microcontroller may be used to read the data and images from the memory type device and output them in a suitable format to display the information on a liquid crystal display.

Any suitable type of small high power battery unit may be used. For example, the battery unit may be a rechargeable type unit.

Further, it will be clear that, although in the embodiments the moving images are made by showing a series of stored bitmap files sequentially on the display device, the moving image may be produced by storing a file in a video format on the memory device. For example, suitable formats such as MPEG, AVI and DV format may be used.

## Claims

1. A method of displaying a visual representation (503) of a gemstone (501) associated with a packaging unit (301, 701, 801, 901) for the gemstone (501), the packaging unit (301, 701, 801, 901) comprising a display device (205, 711, 811), and a memory device (109), the method comprising the steps of:
storing information related to a visual representation of the gemstone (501) in the memory device (109); and
arranging the display device (205, 711, 811) to display a visual representation (503) of the gemstone (501) associated with the packaging unit using the stored information in the memory device (109).

2. The method of claim 1 wherein the stored information comprises a plurality of stored electronic images providing a visual representation of the gemstone (501).

3. The method of claim 1 wherein the stored information comprises a video file (103) providing a visual representation of the gemstone (501).

4. The method of claim 1 further comprising the step of displaying the stored information as a moving image (503) of the gemstone (501).

5. The method of claim 1, wherein the stored information (103,105) comprises data (105) associated with the gemstone (501).

6. The method of claim 5, wherein the data (105) includes at least an identification number (507) uniquely identifying the gemstone (501).

7. The method of claim 1 wherein the gemstone (501) is situated outside of the packaging unit (301, 701, 801, 901).

8. The method of claim 1 wherein the gemstone (501) is situated inside the packaging unit (301, 701, 801, 901).

9. The method of claim 1 wherein the packaging unit (301, 701, 801, 901) further comprises certification information (307) associated with the gemstone.

10. The method of any preceding claim wherein the packaging unit further comprises a memory port (201) and the method further comprises fitting the memory device (109) in the memory port (201).

11. The method of any preceding claim wherein the gemstone is a diamond.

12. The method of claim 11 wherein the stored information comprises image information showing the scintillation of the diamond.

13. The method of claim 1 further comprising the steps of arranging a plurality of said packaging units (301, 701, 801, 901) next to each other.

14. The method of claim 1 wherein the packaging unit (901) further comprises a lid (907) and the display device (911) is attached to the lid (907) such that the display device (911) is visible when the lid (907) is open.

15. The method of claim 1 wherein the packaging unit (801) further comprises a lid (807), and the display device (811) is attached to the lid (807) such that the display device (811) is visible when the lid (807) is closed.

16. The combination of a packaging unit (301, 701, 801, 901) and a gemstone (501)associated with the packaging unit, the packaging unit (301, 701, 801, 901) comprising a display device (205, 711, 811) and a a memory device (109), wherein the memory device (109) stores information related to the gemstone (501) and the display device (205, 711, 811) is arranged to display the stored information.

17. The combination as claimed in claim 16 wherein the stored information comprises a plurality of stored electronic images providing a visual representation of the gemstone (501).

18. The combination as claimed in claim 16 wherein the stored information comprises a video file providing a visual representation of the gemstone (501).

19. The combination as claimed in claim 16 wherein the stored information is displayed as a moving image of the gemstone (501) on the display device (205, 711, 811).

20. The combination as claimed in claim 16 wherein the stored information comprises data associated with the gemstone (501).

21. The combination as claimed in claim 20 wherein the data comprises at least an identification number (507) uniquely identifying the gemstone (501).

22. The combination as claimed in claim 16 wherein the gemstone (501) is located within the packaging unit (301, 701, 801, 901).

23. The combination as claimed in claim 16, further comprising certification information associated with the gemstone (501).

24. The combination as claimed in claim 16, wherein the packaging unit further comprises a memory port (201),
wherein the memory device is insertable within the memory port (201).

25. The combination as claimed in any of claims 16 to 24 wherein the gemstone is a diamond.

26. The combination as claimed in claim 25 wherein the stored information comprises moving images showing the scintillation of the diamond.

27. The combination as claimed in claim 16 further comprising a lid (907), the lid (907) comprising an inner surface, wherein the display device (911) is attached to the inner surface of the lid (907) such that the display device (911) is visible when the lid (907) is open.

28. The combination as claimed in claim 16 further comprising a lid (807), the lid (807) comprising an outer surface, wherein the display device (811) is attached to the outer surface of the lid (807) such that the display device (811) is visible when the lid (807) is closed.

29. The combination as claimed in claim 16, wherein the packaging unit comprises first packaging means (701) holding the gemstone and second packaging means (709) comprising the memory means (109) and the display means (711).

30. The combination as claimed in claim 29 further comprising additional information related to the gemstone (501).

## Patentansprüche

1. Verfahren zum Anzeigen einer visuellen Darstellung (503) eines Edelsteins (501), die einer Verpackungseinheit (301, 701, 801, 901) für den Edelstein (501) zugeordnet ist, wobei die Verpackungseinheit (301, 701, 801, 901) eine Anzeigeeinrichtung (205, 711, 811) und eine Speichereinrichtung (109) umfasst, wobei das Verfahren die folgenden Schritte umfasst:
Speichern von Informationen, die sich auf eine visuelle Darstellung des Edelsteins (501) beziehen, in die Speichereinrichtung (109) und
Einrichten der Anzeigeeinrichtung (205, 711, 811) so, dass sie eine visuelle Darstellung (503) des Edelsteins (501), dem die Verpackungseinheit zugeordnet ist, unter Verwendung der in der Speichereinrichtung (109) gespeicherten Informationen anzeigt.

2. Verfahren nach Anspruch 1, wobei die gespeicherten Informationen eine Vielzahl von gespeicherten elektronischen Bildern umfassen, die eine visuelle Darstellung des Edelsteins (501) ermöglichen.

3. Verfahren nach Anspruch 1, wobei die gespeicherten Informationen eine Videodatei (103) umfassen, die eine visuelle Darstellung des Edelsteins (501) ermöglicht.

4. Verfahren nach Anspruch 1, das ferner den Schritt des Anzeigens der gespeicherten Informationen als ein Bewegtbild (503) des Edelsteins (501) umfasst.

5. Verfahren nach Anspruch 1, wobei die gespeicherten Informationen (103, 105) Daten (105) umfassen, die dem Edelstein (501) zugeordnet sind.

6. Verfahren nach Anspruch 5, wobei die Daten (105) mindestens eine Identifikationsnummer (507) enthalten, die den Edelstein (501) eindeutig identifiziert.

7. Verfahren nach Anspruch 1, wobei sich der Edelstein (501) außerhalb der Verpackungseinheit (301, 701, 801, 901) befindet.

8. Verfahren nach Anspruch 1, wobei sich der Edelstein (501) im Inneren der Verpackungseinheit (301, 701, 801, 901) befindet.

9. Verfahren nach Anspruch 1, wobei die Verpackungseinheit (301, 701, 801, 901) ferner Zertifizierungsinformationen (307) umfasst, die dem Edelstein zugeordnet sind.

10. Verfahren nach einem der vorhergehenden Ansprüche, wobei die Verpackungseinheit ferner einen Speicherport (201) umfasst und das Verfahren ferner das Einsetzen der Speichereinrichtung (109) in den Speicherport (201) umfasst.

11. Verfahren nach einem der vorhergehenden Ansprüche, wobei der Edelstein ein Diamant ist.

12. Verfahren nach Anspruch 11, wobei die gespeicherten Informationen Bildinformationen umfassen, die das Funkeln des Diamanten zeigen.

13. Verfahren nach Anspruch 1, das ferner die Schritte des Anordnens mehrerer Verpackungseinheiten (301, 701, 801, 901) nebeneinander umfasst.

14. Verfahren nach Anspruch 1, wobei die Verpackungseinheit (901) ferner einen Deckel (907) umfasst und die Anzeigeeinrichtung (911) so an dem Deckel (907) angebracht ist, dass sie sichtbar ist, wenn der Deckel (907) auf ist.

15. Verfahren nach Anspruch 1, wobei die Verpackungseinheit (801) ferner einen Deckel (807) umfasst und die Anzeigeeinrichtung (811) so an dem Deckel (807) angebracht ist, dass sie sichtbar ist, wenn der Deckel (807) zu ist.

16. Kombination aus einer Verpackungseinheit (301, 701, 801, 901) und einem Edelstein (501), dem die Verpackungseinheit zugeordnet ist, wobei die Verpackungseinheit (301, 701, 801, 901) eine Anzeigeeinrichtung (205, 711, 811) und eine Speichereinrichtung (109) umfasst, wobei die Speichereinrichtung (109) Informationen speichert, die sich auf den Edelstein (501) beziehen, und die Anzeigeeinrichtung (205, 711, 811) so eingerichtet ist, dass sie die gespeicherten Informationen anzeigt.

17. Kombination nach Anspruch 16, wobei die gespeicherten Informationen eine Vielzahl von gespeicherten elektronischen Bildern umfassen, die eine visuelle Darstellung des Edelsteins (501) ermöglichen.

18. Kombination nach Anspruch 16, wobei die gespeicherten Informationen eine Videodatei umfassen, die eine visuelle Darstellung des Edelsteins (501) ermöglicht.

19. Kombination nach Anspruch 16, wobei die gespeicherten Informationen als ein Bewegtbild des Edelsteins (501) auf der Anzeigeeinrichtung (205, 711, 811) angezeigt werden.

20. Kombination nach Anspruch 16, wobei die gespeicherten Informationen Daten umfassen, die dem Edelstein (501) zugeordnet sind.

21. Kombination nach Anspruch 20, wobei die Daten mindestens eine Identifikationsnummer (507) umfassen, die den Edelstein (501) eindeutig identifiziert.

22. Kombination nach Anspruch 16, wobei sich der Edelstein (501) im Inneren der Verpackungseinheit (301, 701, 801, 901) befindet.

23. Kombination nach Anspruch 16, die ferner Zertifizierungsinformationen umfasst, die dem Edelstein (501) zugeordnet sind.

24. Kombination nach Anspruch 16, wobei die Verpackungseinheit ferner einen Speicherport (201) umfasst, wobei die Speichereinrichtung in den Speicherport (201) einführbar ist.

25. Kombination nach einem der Ansprüche 16 bis 24, wobei der Edelstein ein Diamant ist.

26. Kombination nach Anspruch 25, wobei die gespeicherten Informationen Bewegtbilder umfassen, die das Funkeln des Diamanten zeigen.

27. Kombination nach Anspruch 16, die ferner einen Deckel (907) umfasst, der eine Innenfläche aufweist, wobei die Anzeigeeinrichtung (911) an der Innenfläche des Deckels (907) angebracht ist, sodass die Anzeigeeinrichtung (911) sichtbar ist, wenn der Deckel (907) auf ist.

28. Kombination nach Anspruch 16, die ferner einen Deckel (807) umfasst, der eine Außenfläche aufweist, wobei die Anzeigeeinrichtung (811) an der Außenfläche des Deckels (807) angebracht ist, sodass die Anzeigeeinrichtung (811) sichtbar ist, wenn der Deckel (807) zu ist.

29. Kombination nach Anspruch 16, wobei die Verpackungseinheit erste Verpackungsmittel (701) umfasst, die den Edelstein festhalten, und zweite Verpackungsmittel (709), die die Speichermittel (109) und die Anzeigemittel (711) umfassen.

30. Kombination nach Anspruch 29, die ferner zusätzliche Informationen umfasst, die sich auf den Edelstein (501) beziehen.

## Revendications

1. Procédé d'affichage d'une représentation visuelle (503) d'une pierre gemme (501) associée à une unité d'emballage (301, 701, 801, 901) pour la pierre gemme (501), l'unité d'emballage (301, 701, 801, 901) comprenant un dispositif d'affichage (205, 711, 811) et un dispositif de mémoire (109), le procédé comprenant les étapes consistant à :
stocker des informations se rapportant à une représentation visuelle de la pierre gemme (501) dans le dispositif de mémoire (109) ; et
configurer le dispositif d'affichage (205, 711, 811) pour afficher une représentation visuelle (503) de la pierre gemme (501) associée à l'unité d'emballage en utilisant les informations stockées dans le dispositif de mémoire (109).

2. Procédé selon la revendication 1, dans lequel les informations stockées comprennent une pluralité d'images électroniques stockées fournissant une représentation visuelle de la pierre gemme (501).

3. Procédé selon la revendication 1, dans lequel les informations stockées comprennent un fichier vidéo (103) fournissant une représentation visuelle de la pierre gemme (501).

4. Procédé selon la revendication 1, comprenant en outre l'étape consistant à afficher les informations stockées sous la forme d'une image animée (503) de la pierre gemme (501).

5. Procédé selon la revendication 1, dans lequel les informations stockées (103, 105) comprennent des données (105) associées à la pierre gemme (501).

6. Procédé selon la revendication 5, dans lequel les données (105) comprennent au moins un numéro d'identification (507) qui donne une identification propre à la pierre gemme (501).

7. Procédé selon la revendication 1, dans lequel la pierre gemme (501) est située à l'extérieur de l'unité d'emballage (301, 701, 801, 901).

8. Procédé selon la revendication 1, dans lequel la pierre gemme (501) est située à l'intérieur de l'unité d'emballage (301, 701, 801, 901).

9. Procédé selon la revendication 1, dans lequel l'unité d'emballage (301, 701, 801, 901) comprend en outre une information de certification (307) associée à la pierre gemme.

10. Procédé selon l'une quelconque des revendications précédentes, dans lequel l'unité d'emballage comprend en outre un port mémoire (201) et le procédé comprend de plus le fait de loger le dispositif de mémoire (109) dans le port mémoire (201).

11. Procédé selon l'une quelconque des revendications précédentes, dans lequel la pierre gemme est un diamant.

12. Procédé selon la revendication 11, dans lequel les informations stockées comprennent une information d'image montrant le scintillement du diamant.

13. Procédé selon la revendication 1, comprenant en outre les étapes consistant à disposer plusieurs desdits unités d'emballage (301, 701, 801, 901) les unes à côté des autres.

14. Procédé selon la revendication 1, dans lequel l'unité d'emballage (901) comprend en outre un couvercle (907) et le dispositif d'affichage (911) est attaché au couvercle (907) de telle manière que le dispositif d'affichage (911) est visible quand le couvercle (907) est ouvert.

15. Procédé selon la revendication 1, dans lequel l'unité d'emballage (801) comprend en outre un couvercle (807), et le dispositif d'affichage (811) est attaché au couvercle (807) de telle manière que le dispositif d'affichage (811) est visible quand le couvercle (807) est fermé.

16. Combinaison d'une unité d'emballage (301, 701, 801, 901) et d'une pierre gemme (501) associée à l'unité d'emballage, l'unité d'emballage (301, 701, 801, 901) comprenant un dispositif d'affichage (205, 711, 811) et un dispositif de mémoire (109), le dispositif de mémoire (109) stockant des informations se rapportant à la pierre gemme (501) et le dispositif d'affichage (205, 711, 811) étant prévu pour afficher les informations stockées.

17. Combinaison selon la revendication 16, dans laquelle les informations stockées comprennent une pluralité d'images électroniques stockées fournissant une représentation visuelle de la pierre gemme (501).

18. Combinaison selon la revendication 16, dans laquelle les informations stockées comprennent un fichier vidéo fournissant une représentation visuelle de la pierre gemme (501).

19. Combinaison selon la revendication 16, dans laquelle les informations stockées sont affichées sous la forme d'une image animée de la pierre gemme (501) sur le dispositif d'affichage (205, 711, 811).

20. Combinaison selon la revendication 16, dans laquelle les informations comprennent des données associées à la pierre gemme (501).

21. Combinaison selon la revendication 20, dans laquelle les données comprennent au moins un numéro d'identification (507) qui donne une identification propre à la pierre gemme (501).

22. Combinaison selon la revendication 16, dans laquelle la pierre gemme (501) est située à l'intérieur de l'unité d'emballage (301, 701, 801, 901).

23. Combinaison selon la revendication 16, comprenant en outre une information de certification associée à la pierre gemme (501).

24. Combinaison selon la revendication 16, dans laquelle l'unité d'emballage comprend en outre un port mémoire (201), le dispositif de mémoire étant insérable dans le port mémoire (201).

25. Combinaison selon l'une quelconque des revendications 16 à 24, dans laquelle la pierre gemme est un diamant.

26. Combinaison selon la revendication 25, dans laquelle les informations stockées comprennent des images animées montrant le scintillement du diamant.

27. Combinaison selon la revendication 16, comprenant en outre un couvercle (907), le couvercle (907) comprenant une surface intérieure, dans laquelle le dispositif d'affichage (911) est attaché à la surface intérieure du couvercle (907) de telle manière que le dispositif d'affichage (911) est visible quand le couvercle (907) est ouvert.

28. Combinaison selon la revendication 16, comprenant en outre un couvercle (807), le couvercle (807) comprenant une surface extérieure, dans laquelle le dispositif d'affichage (811) est attaché à la surface extérieure du couvercle (807) de telle manière que le dispositif d'affichage (811) est visible quand le couvercle (807) est fermé.

29. Combinaison selon la revendication 16, dans laquelle l'unité d'emballage comprend un premier moyen d'emballage (701) qui maintient la pierre gemme et un deuxième moyen d'emballage (709) comprenant le moyen de mémoire (109) et le moyen d'affichage (711).

30. Combinaison selon la revendication 29, comprenant en outre des informations supplémentaires se rapportant à la pierre gemme (501).
